# EUROPÄISCHE PATENTSCHRIFT

(11) **EP 0 742 179 B1**
(45) Veröffentlichungstag und Bekanntmachung des Hinweises auf die Patenterteilung: **13.10.1999**
(21) Anmeldenummer: 96106500.0
(22) Anmeldetag: 25.04.1996
(51) Int. Cl.: C04B 28/02, C04B 40/00

(54) **Alkalifreier, flüssiger Abbinde- und Erhärtungsbeschleuniger für Zement**
Alkali-free liquid setting and hardening accelerator for cement
Accélérateur de prise et de durcissement liquide exempt de métaux alcalins

(30) Priorität: 09.05.1995 CH 134195
(43) Veröffentlichungstag der Anmeldung: 13.11.1996
(73) Patentinhaber: Sika AG, vorm. Kaspar Winkler & Co., CH-8048 Zürich (CH)
(72) Erfinder: Bürge, Theodor A., 8954 Geroldswil (CH); Bösch, Klemens,, 8967 Widen (CH); Mai, Dieter,, 8865 Bilten (CH)
(74) Vertreter: Blum, Rudolf Emil Ernst

(56) Entgegenhaltungen:
- EP-A- 0 076 927
- EP-A- 0 222 932
- EP-A- 0 566 413
- DATABASE WPI Week 7704 Derwent Publications Ltd., London, GB; AN 77-06802y XP002008477 & JP-A-51 144 425 (ONODA CEMENT KK)
- DATABASE WPI Week 7930 Derwent Publications Ltd., London, GB; AN 79-55122b XP002008478 & JP-A-54 073 825 (SUZUKI)

## Beschreibung

Die vorliegende Erfindung betrifft einen Abbinde- und Erhärtungsbeschleuniger für Zement, der insbesonders im wesentlichen alkalifrei ist und als Dispersion verwendet werden kann.

Es sind bereits viele Substanzen bekannt, welche das Abbinden und Erhärten von Beton beschleunigen. Die gebräuchlichsten sind u.a. stark alkalisch reagierende Stoffe, wie Alkalihydroxide, Alkalikarbonate, Alkalisilikate, Alkalialuminate, und Erdalkalichloride. Bei den stark alkalisch reagierenden Stoffen treten unerwünschte Belästigungen des Verarbeiters auf. So können solche Produkte die Haut sehr stark verätzen und Augenentzündungen und Hornhautverätzungen verursachen, welche die Sehfähigkeit beeinträchtigen können. Durch Einatmen des beim Verarbeiten entstehenden Staubes können auch schädliche Auswirkungen auf die Atemwege entstehen.

Betontechnologisch gesehen reduzieren stark alkalische Abbindebeschleuniger die Endfestigkeiten, vergrössern das Schwinden, was zu Rissbildung führen kann und deshalb die Dauerhaftigkeit eines Bauwerkes in Frage stellt.

Alkalihaltige Beschleuniger können ausserdem ausgewaschen werden und führen dadurch zu Verunreinigungen von Grund- und Trinkwasser sowie von Flüssen und Seen. Diese Verunreinigungen können auch zu Versinterungen von Drainagen und Entwässerungskanälen führen.

Chloridhaltige Abbindebeschleuniger sind in der Regel auf einer Baustelle unerwünscht, weil sie sowohl an den Armierungseisen im Beton wie auch an Baustellengeräten zur Korrosion führen können.

Im weiteren ist bekannt, dass chloridhaltige Abbindebeschleuniger die Chemikalienbeständigkeit, vor allem die Sulfatbeständigkeit des Zementes, stark reduzieren.

Aus JP 511 444 25 ist ein Beschleuniger bekannt, der amorphes Aluminiumhydroxid und gegebenenfalls eine Mischung aus Gips-Dihydrat, -Hemihydrat und -Anhydrit enthält.

Dieser Beschleuniger ist für die Verwendung in dispergierter Form ungeeignet, er ist nicht lagerstabil, da Hemihydrat und Anhydrit mit Wasser aushärten.

Ziel der vorliegenden Erfindung war es deshalb, einen Abbinde- und Erhärtungsbeschleuniger für Zement bereitzustellen, der vorzugsweise alkalifrei ist und - falls gewünscht - als wässrige Dispersion eingesetzt werden kann.

Dieses Ziel wurde erreicht durch das Bereitstellen eines Abbinde- und Erhärtungsbeschleunigers, der neben Kalziumsulfat in Form des Dihydrats zusätzlich amorphes Aluminiumhydroxid und/oder amorphe und/oder kristalline basische Aluminiumsalze gemäss Anspruch 1 enthält. Weitere Aspekte der Erfindung sowie bevorzugte Ausführungsarten sind in den Neben- resp. Unteransprüchen definiert.

Die meisten heute gebräuchlichen Aluminiumkomponenten für die Beschleunigung des Abbindens und Erhärtens von Beton, wie Kalziumaluminate und Kalziumsulfoaluminate, sind ungeeignet für flüssige Beschleuniger, da sie mit Wasser reagieren. Die löslichen Salze, wie Aluminiumsulfate oder Aluminiumnitrate, sind ungeeignet, weil ihre Lösungen zu verdünnt sind um eine genügende Abbinde- und Erhärtungsbeschleunigung des Betons bei einer Dosierung von höchstens 10 % des Zementgewichts zu erreichen. Andere Salze, wie Alaune enthalten unerwünschte Alkalien.

Es wurde nun überraschenderweise gefunden, dass eine Mischung enthaltend
1. Kalziumsulfat, z.B. in Form von Gips (Kalziumsulfatdihydrat), Phosphatgips oder Mischungen davon mit weniger als 50 % Verunreinigungen wie Metallsulfate oder andere Kalziumsalze, und
2. Amorphes Aluminiumhydroxid, und/oder basische Aluminiumsalze, wobei ein bevorzugtes basisches Aluminiumsalz amorphes basisches Aluminiumsulfat¹, mit weniger als 25 % von anderen Anionen wie Phosphate, Karbonate, Azetate, Formiate, etc.
   ein sehr guter alkalifreier Abbinde- und Erhärtungsbeschleuniger für Zement ist, der gut als wässrige Dispersion eingesetzt werden kann.
   In der vorliegenden Erfindung wurde zum ersten Mal ein in flüssiger Form anwendbarer, alkalifreier Beschleuniger mit ausgezeichneter Abbinde- und Erhärtungsbeschleunigung in einem Produkt vereint.
   Für diesen werden - neben der obengenannten Komponente 2 - als Komponente 1 Gips (Kalziumsulfatdihydrat), Phosphatgips oder Mischungen davon mit weniger als 50 % Verunreinigungen wie Metallsulfate und andere Kalziumsalze eingesetzt und ferner
3. Wasser (bevorzugt Trinkwasser)
4. bis zu 10 % Zusätze von Dispergierhilfsmitteln wie sulfonierte Melamin- oder Naphthalin-Formaldehyd-Kondensate, Polymere oder Copolymere der Acryl- oder Methacrylsäure oder deren Derivate, Phosphonsäurederivate, Phosphate und Polyphosphate, Zitronensäure, oder Salze der genannten Säuren,
5. bis zu 5 % Verdicker wie Bentonit, Bentone, amorphe Siliziumdioxide, fermentierte organische Biopolymere, Polyglykolether, Alginate, Acrylat- oder Urethanverdicker,
6. bis zu 5 % weitere Zusätze zur Vereinfachung der Produktion oder Applikation wie Konservierungsmittel, Entschäumer, Verflüssiger, etc.

¹ Die Bezeichnung amorphes basisches Aluminiumsulfat steht für eine Mischung von amorphem Aluminiumhydroxid, worin ein Teil der Hydroxigruppen durch Sulfat ersetzt wurden. In Abhängigkeit von der Zahl der ersetzten Hydroxidgruppen, enthält die Mischung Al(OH)₃ und eine oder mehrere der folgenden Substanzen mit weiteren Verunreinigungen: Al₂(OH)₄SO₄, AlOHSO₄, Al₂₍SO₄)₃.

Zur Herstellung des erfindungsgemässen Slurries können Gips und Aluminiumkomponente getrennt oder nach Vormischung, vorzugsweise mit Hilfe eines Dispergiermittels, in die wäßrige Phase eingeführt werden. Zur Stabilisierung der Suspension wird vorzugsweise ein Verdicker eingesetzt. Sehr gut geeignete Dispergierhilfsmittel/Stabilisatoren sind beispielsweise Alkalisalze von Polyacrylsäuren und/oder Acrylsäurecopolymeren.

Als Alternative kann der Gips auch dem Beton oder Zement im Betonwerk oder auf der Baustelle Zugegeben werden. Dies erlaubt höhere Konzentrationen der Aluminiumkomponente im Slurry und daher eine geringere Dosierung des Beschleunigers auf der Baustelle. Dies ist möglich, weil Gips, d.h. das Kalziumsulfatdihydrat, alleine keine beschleunigende Wirkung auf das Abbinden des Betons hat und deshalb im Beton vorhandene Feuchtigkeit unkritisch ist. Der pH-Wert des Slurries sollte nicht stark basisch oder sauer sein, damit die Wirksamkeit nicht durch Eindicken oder Kristallisation beeinträchtigt wird.

Die erfindungsgemässen Beschleuniger können nicht nur dispergiert in Wasser, sondern auch als Pulver zur Anwendung gelangen. Durch den Einsatz geeigneter Dispergierhilfsmittel können Dispersionen mit einem Feststoffgehalt bis zu 80 % hergestellt werden.

Bei der Verwendung der Beschleuniger in Pulverform werden diese mit dem trockenen Zement oder mit dem trockenen Mörtel oder Beton vorgemischt und diese Mischung anschliessend durch Zugabe von Wasser ausgehärtet. Obschon diese Verwendung gute Resultate liefert, ist die Verwendung der Beschleuniger als Dispersion bevorzugt, da sich damit leichter homogene Durchmischung mit der bindemittelhaltigen Komponente erzielen lässt.

Selbstverständlich können die erfindungsgemässen Beschleuniger auch vor der Anwendung im Werk bei der Bindemittelherstellung oder unmittelbar bei der Verwendung dem trockenen Bindemittel alleine oder dem vorfabrizierten trockenen Mörtel oder Beton zugemischt werden.

Wie bereits oben erwähnt können die erfindungsgemässen Beschleuniger dem trockenen oder mit Wasser angemachten Bindemittel, Mörtel oder Beton im Werk (vorzugsweise trockene bindemittelhaltige Komponente und pulverförmiger Beschleuniger oder beliebig feuchte, bindemittelhaltige Komponente und Gips) oder auf der Baustelle zugegeben werden. Die Zugabe kann im Mischer, in der Förderpumpe, der Förderleitung, der Vorbenetzungsdüse, der Spritzdüse erfolgen oder der Beschleuniger kann über einen statischen Mischer mit einem Pulverdosiergerät oder einem Flüssigdosiergerät direkt in die Mischung oder mit der Förderluft zugegeben werden.

Der Gips ist Bestandteil des Beschleunigers, damit sich im Beton das Mineral Ettringit bilden kann, welches massgeblich für die Erhärtungsbeschleunigung verantwortlich ist.

Das Mol-Verhältnis Aluminium zu Sulfat (umfassend alle im Beschleuniger enthaltenen Sulfationen) liegt üblicherweise im Bereich von 0,1 bis 10.

Der Beschleuniger gelangt üblicherweise in Mengen von 0,1 bis 20 Gewichtsprozent (Trockensubstanz), bezogen auf das Gewicht des Zements, zum Einsatz.

Anwendungsmöglichkeiten dieses Beschleunigers liegen in der Herstellung vorfabrizierter Elemente und dem Beschleunigen von auf der Baustelle hergestellten Betons. In ersten Falle kann die übliche Erhärtungsbeschleunigung durch Wärme (Elektro- oder Oelheizung oder Dampf) verkürzt oder gar eliminiert werden oder es kann auch bei tiefer Temperatur weiter betoniert werden. Anwendungen ergeben sich auch bei der Herstellung rasch abbindender Zement- und Mörtelmischungen, speziell zum Fixieren von Fertigteilen, Gussstücken, etc.

Ein weiteres Einsatzgebiet ist das Beschleunigen der Erhärtung von Zementaufschlämmungen, welche für die Abdichtung und Verfestigung von Fels, Lockergestein und Böden verwendet wird.

Ein besonderes Einsatzgebiet ist der Spritzmörtel und Spritzbeton. Solche Mörtel und Betone dienen zur Herstellung von Bauwerken des Hoch- und Tiefbaus, sowie für den Ausbau und die Auskleidung von unterirdischen, natürlich oder künstlich geschaffenen Hohlräumen, wie Stollen-, Tunnel- oder Bergbauten, bei welchen der Beton den statischen Erfordernissen entsprechen, sowie wasserdicht sein muss. Sie dienen ebenfalls zur Konsolidierung von Baugruben, Böschungen, lockeren Felswänden, etc.

Die erfindungsgemässen Beschleuniger sind sowohl für das Trocken- als auch für das Nasspritzverfahren geeignet.

Die Erfindung wird in der Folge anhand von Beispielen zusätzlich erläutert.

### Beispiel 1

Es wurden zwei verschiedene Slurrybeschleuniger hergestellt und im Trockenspritzen auf ihre Wirkung im Beton untersucht.

| | | |
|---|---|---|
| Slurry A: (wenig Gips) | 25,00 % | amorphes Alumiuniumhydroxid |
| | 15,00 % | Gips |
| | 1,50 % | modifizierte Polyacrylsäure |
| | 0,10 % | Konservierungsmittel |
| | 0,05 % | organischer Verdicker |
| | 58,35 % | Wasser |
| Slurry B: (viel Gips) | 25,00 % | amorphes Aluminiumhydroxid |
| | 35,00 % | Gips |
| | 5,00 % | modifizierte Polyacrylsäure |
| | 0,10 % | Konservierungsmittel |
| | 0,05 % | organischer Verdicker |
| | 34,85 % | Wasser |

Der Spritzbeton für das Trockenspritzverfahren enthielt 350 kg/m³ Portlandzement und das Grösstkorn betrug 8 mm. Eine Aliva AL 246 Spritzbetonmaschine mit einem 3,6 l Rotor und 40 m Schlauch mit einem Innendurchmesser von 32 mm wurde eingesetzt. Das Abbindeverhalten wurde über den Penetrationswiderstand mit einer Mecmesin microprocessor force gauge und einem Nadelaufsatz bestimmt.

| Beschleuniger | Penetrationswiderstand in N nach | | | | | |
|---|---|---|---|---|---|---|
| | 1 min | 5 min | 10 min | 20 min | 30 min | 40 min |
| | | | | | | |
| 5.8 % Slurry A | 10 | 50 | 130 | 330 | 410 | >500 |
| 9.6 % Slurry A | 10 | 70 | 210 | 430 | 490 | >500 |
| 5.8 % Slurry B | 15 | 50 | 120 | 330 | 440 | >500 |
| 9.2 % Slurry B | 15 | 60 | 200 | 420 | >500 | |

| Beschleuniger | Druckfestigkeit von Bohrkernen im Alter von [MPa] | | | |
|---|---|---|---|---|
| | 1 Tag | 7 Tagen | 28 Tagen | 90 Tagen |
| | | | | |
| 5.8 % Slurry A | 20.8 | 41.3 | 48.0 | 54.3 |
| 9.6 % Slurry A | weich | 36.7 | 43.8 | 49.7 |
| 5.8 % Slurry B | 33.3 | 50.6 | 58.5 | 65.0 |
| 9.2 % Slurry B | 27.2 | 48.1 | 57.8 | 64.2 |

Es ist offensichtlich, dass Beton mit dem Slurry B (mit der grösseren Gipsmenge) beschleunigt, eine deutlich bessere Festigkeitsentwicklung im Vergleich zum Slurry A zeigt.

Beide Slurries sind mindestens vier Monate lagerstabil und zeigen keinen Aktivitätsverlust während dieser Zeit.

### Beispiel 2

Nasspritzbeton mit 425 kg/m³ Portlandzement und maximaler Korngrösse von 8 mm wurde im Dichtstromverfahren appliziert. Als Betonpumpe wurde ein Aliva 277 Aggregat verwendet. Als Vergleich wurden zwei Slurries und ein kommerziell erhältlicher flüssiger Alkali-aluminat/hydroxid/carbonat Beschleuniger (Sigunit) verwendet.

| | | |
|---|---|---|
| Slurry C (ohne Gips): | 22,50 % | amorphes basisches Aluminiumsulfat¹ |
| | 2,50 % | modifiziertes Polyacrylsäuresalz |
| | 0,10 % | Konservierungsmittel |
| | 0,40 % | organischer Verdicker |
| | 74,50 | Wasser |
| Slurry D (mit Gips): | 21,10 % | amorphes basisches Aluminiumsulfat¹ |
| | 25,80 % | Gips |
| | 2,30 % | modifiziertes Polyacrylsäuresalz |
| | 0,1 % | Konservierungsmittel |
| | 0,40 % | Organischer Verdicker |
| | 50,30 % | Wasser |

| | | |
|---|---|---|
| ¹ Die Bezeichnung amorphes basisches Aluminiumsulfat steht für eine Mischung von amorphem Aluminiumhydroxid, worin ein Teil der Hydroxigruppen durch Sulfat ersetzt wurden. In Abhängigkeit von der Zahl der ersetzten Hydroxidgruppen, enthält die Mischung Al(OH)₃ und eine oder mehrere der folgenden Substanzen mit weiteren Verunreinigungen: Al₂(OH)₄SO₄, AlOHSO₄, Al₂₍SO₄)₃. | | |

| Beschleuniger | Eindringwiderstand in N nach | | | | | |
|---|---|---|---|---|---|---|
| | 1 min | 10 min | 20 min | 40 min | 60 min | 120 min |
| | | | | | | |
| 6 % Slurry C | 1 | 21 | 50 | 110 | 130 | 180 |
| 9 % Slurry C | 1 | 40 | 65 | 110 | 150 | 270 |
| 6 % Slurry D | 1 | 25 | 55 | 120 | 150 | 210 |
| 9 % Slurry D | 1 | 40 | 120 | 190 | 270 | 330 |
| 12 % Slurry D | 1 | 50 | 140 | 260 | 360 | 450 |
| 6 % Sigunit | 7 | 50 | 125 | 160 | 200 | 240 |

| Beschleuniger | Druckfestigkeit von Bohrkernen in MPa nach | | | |
|---|---|---|---|---|
| | 1 Tag | 7 Tagen | 28 Tagen | 90 Tagen |
| | | | | |
| 6 % Slurry C | 13.2 | 31.1 | 37.7 | 42.2 |
| 9 % Slurry C | 9.5 | 28.9 | 36.0 | 40.1 |
| 6 % Slurry D | 18.4 | 36.9 | 47.5 | 52.9 |
| 9 % Slurry D | 16.9 | 34.7 | 42.8 | 48.8 |
| 12 % Slurry D | 13.8 | 31.3 | 39.3 | 44.9 |
| 6 % Sigunit | 14.5 | 21.0 | 27.2 | 32.2 |

Auch im Nasspritzdichtstromverfahren ergibt der Zusatz von Gips eine deutliche Verbesserung der Druckfestigkeiten.

### Beispiel 3

Das Auslaugverhalten wurde wie folgt bestimmt:
Von den Spritzbetonversuchen aus Beispiel 2 wurden 95 mm Bohrkerne genommen, in 10 mm dünne Scheiben geschnitten und nach 28 Tagen Aushärtung auf eluierbare Anteile untersucht. Die Methode wurde von der Technischen Universität München, Institut für Bauingenieurwesen II, Leitung Prof. Dr. R. Springenschmid, übernommen.

6 % des käuflichen flüssigen Kaliumaluminat/Kaliumhydroxid/Kaliumcarbonat-Beschleunigers (Sigunit) aus Beispiel 2 ergaben folgende Eluatkonzentrationen:

| | |
|---|---|
| Alkalien (Na⁺/K⁺) | 98,5 mg/l |
| SO₄⁻⁻ | 2,4 mg/l |
| Ca⁺⁺ | 140,3 mg/l |

6 % des erfindungsgemässen flüssigen Beschleunigers (Slurry D) aus Beispiel 2 ergaben folgende Eluatkonzentrationen:

| | |
|---|---|
| Alkalien (Na⁺/K⁺) | 15,6 mg/l |
| SO₄⁻⁻ | 1,2 mg/l |
| Ca⁺⁺ | 61,0 mg/l |

## Patentansprüche

1. Abbinde- und Erhärtungsbeschleuniger für Zement, Mörtel und Beton enthaltend Kalziumsulfat und eine Aluminiumverbindung, dadurch gekennzeichnet, dass a) das Kalziumsulfat Kalziumsulfatdihydrat ist und b) die Aluminiumverbindung amorphes Aluminiumhydroxid und/oder ein amorphes und/oder kristallines basisches Aluminiumsalz ist.

2. Beschleuniger nach Anspruch 1, dadurch gekennzeichnet, dass er alkali- und chloridfrei ist.

3. Beschleuniger nach Anspruch 1 oder 2, dadurch gekennzeichnet, dass das basische Aluminiumsalz ausgewählt ist aus der Gruppe umfassend Sulfat, Nitrat, Karbonat, Phosphat, Azetat, Formiat oder Mischungen derselben.

4. Beschleuniger nach einem der Ansprüche 1 bis 3, dadurch gekennzeichnet, dass er mindestens 10 Gew.-% amorphes Aluminiumhydroxid und/oder amorphes und/oder kristallines basisches Aluminiumsalz und bis zu 90 Gew.-% der Kalziumsulfatverbindung enthält.

5. Beschleuniger nach einem der Ansprüche 1 bis 4, dadurch gekennzeichnet, dass er ein Mol-Verhältnis Aluminium zu Sulfat von 0,1 bis 10 aufweist.

6. Beschleuniger nach einem der Ansprüche 1 bis 5, dadurch gekennzeichnet, dass er dispergiert in Wasser vorliegt.

7. Beschleuniger nach einem der Ansprüche 1 bis 6, dadurch gekennzeichnet, dass er mindestens ein Dispergierhilfsmittel enthält.

8. Beschleuniger nach Anspruch 7, dadurch gekennzeichnet, dass das Dispergierhilfsmittel ausgewählt ist aus der Gruppe umfassend Polymere oder Copolymere der Acrylsäure oder Methacrylsäure oder Derivate davon, sulfonierte Melamin- oder Naphthalin-formaldehydkondensate oder Phosphonsäurederivate oder eine Mischung derselben.

9. Beschleuniger nach einem der Ansprüche 1 bis 8, dadurch gekennzeichnet, dass er mindestens ein Verdickungsmittel enthält.

10. Beschleuniger nach Anspruch 9, dadurch gekennzeichnet, dass das Verdickungsmittel ausgewählt ist aus der Gruppe umfassend Bentonit, Bentone, amorphe Siliziumdioxide, fermentierte organische Biopolymere, Alginate, Polyglykolether, Acrylat oder Urethanverdicker oder Mischungen derselben.

11. Beschleuniger nach einem der Ansprüche 1 bis 10, dadurch gekennzeichnet, dass er in mindestens zwei Komponenten vorliegt, wovon die eine das Kalziumsulfat und die andere das amorphe Aluminiumhydroxid und/oder amorphe und/oder kristalline basische Aluminiumsalze enthält.

12. Verfahren zur Beschleunigung des Abbindens und Erhärtens von Zement sowie daraus hergestellten Mörtels und Betons, dadurch gekennzeichnet, dass man einem Gemisch, das den Zement enthält, einen Beschleuniger nach einem der Ansprüche 1 bis 11 in einer Menge von 0,1 bis 20 Gew.-%, bezogen auf das Gewicht des Zementes, zugibt.

13. Verfahren nach Anspruch 12, dadurch gekennzeichnet, dass der pulverförmige Abbinde- und Erhärtungsbeschleuniger mit dem trockenen Zement oder mit dem trockenen Mörtel oder Beton vorgemischt und diese Mischung anschliessend durch Zugabe von Wasser ausgehärtet wird.

14. Verfahren nach Anspruch 12, dadurch gekennzeichnet, dass die das Kalziumsulfat enthaltende Komponente des Beschleunigers nach Anspruch 11 bei der Herstellung des Mörtels oder Betons im Werk und die das amorphe Aluminiumhydoxid und/oder amorphe und/oder kristalline Aluminiumsalz enthaltende Komponente auf der Baustelle zugemischt werden.

15. Verfahren gemäss einem der Ansprüche 12 bis 14, dadurch gekennzeichnet, dass der Beschleuniger dem trockenen oder mit Wasser angemachten Bindemittel, Mörtel oder Beton im Werk, auf der Baustelle, im Mischer, in der Förderpumpe, der Förderleitung, der Vorbenetzungsdüse, der Spritzdüse oder über einen statischen Mischer mit einem Pulverdosiergerät oder einem Flüssigdosiergerät direkt in die Mischung oder mit der Förderluft zugegeben wird.

16. Verwendung des Beschleunigers nach einem der Ansprüche 1 bis 11 zur Beschleunigung des Abbindens und Erhärtens von Zement.

17. Verwendung des Abbinde- und Erhärtungsbeschleunigers nach einem der Ansprüche 1 bis 11 in Injektionsschlämmen, im Spritzmörtel oder Spritzbeton nach dem Trocken- oder Nassspritzverfahren.

## Claims

1. Setting and hardening accelerator for cement, mortar and concrete containing calcium sulfate and an aluminium compound, characterised in that a) the calcium sulfate is calcium dihydrate and b) the aluminium compound is amorphous aluminium hydroxide and/or and an amorphous and/or crystalline basic aluminium salt.

2. Accelerator according to claim 1, characterised in that it is alkali- and chloride-free.

3. Accelerator according to claim 1 or 2, characterised in that the basic aluminium salt is selected from the group comprising sulfate, nitrate, carbonate, phosphate, acetate, formiate or mixtures thereof.

4. Accelerator according to one of the claims 1 to 3, characterised in that it contains at least 10% by weight of amorphous aluminium hydroxide and/or amorphous and/or crystalline basic aluminium salt and up to 90% by weight of the calcium sulfate compound.

5. Accelerator according to the claims 1 to 4, characterised in that it has a molar ratio of aluminium sulfate of 0,1 to 10.

6. Accelerator according to one of the claims 1 to 5, characterised in that it is dispersed in water.

7. Accelerator according to one of the claims 1 to 6, characterised in that it contains at least one auxiliary dispersing agent.

8. Accelerator according to claim 7, characterised in that the auxiliary dispersing agent is selected from the group comprising polymers or copolymers of the acrylic acid or methacrylic acid or derivatives thereof, sulfonated melamine- or naphthalene-formaldehyde condensates or phosphonic acid derivatives or a mixture thereof.

9. Accelerator according to one of the claims 1 to 8, characterised in that it contains at least one thickener.

10. Accelerator according to claim 9, characterised in that the thickener is selected from the group comprising bentonite, bentones, amorphous silicium dioxides, fermented organic biopolymers, alginates, polyglycol ether, acrylate or urethane thickeners or mixtures thereof.

11. Accelerator according to one of the claims 1 to 10, characterised in that it is present in at least two components whereby the one contains the calcium sulfate and the other the amorphous aluminium hydroxide and/or amorphous and/or crystalline basic aluminium salts.

12. Process for accelerating the setting and hardening of cement as well as the mortars and concrete manufactured therefrom, characterised in that to a mixture containing said cement, an accelerator according one of the claims 1 to 11 is added in an amount of 0,1 to 20% by weight based on the weight of cement.

13. Process according to claim 12, characterised in that the powder-like setting and hardening accelerator is premixed with the dehydrated cement or the dehydrated mortar or with the concrete and said mixture is hardened thereafter through the addition of water.

14. Process according to claim 12, characterised in that the calcium sulfate containing component of the accelerator according to claim 11 is added upon the manufacturing of the mortars and concrete in the factory and that the amorphous aluminium hydroxide and/or amorphous and/or crystalline aluminium salts containing component is added on the construction site.

15. Process according to one of the claims 12 to 14, characterised in that the accelerator is added to the dehydrated binder or to the binder being mixed with water, to the mortar or the concrete in the factory, on the construction site, into the mixer, into the feed-pump, into the conveyer-line, the pre-wetting nozzle, the spraying nozzle or by a static mixer, having a dosage device for powder or a dosage device for liquids, directly into the mixture or by means of the delivery air.

16. Use of the accelerator according to one of the claims 1 to 11 for the acceleration of the setting and hardening of cement.

17. Use of the setting and hardening accelerator according to one of the claims 1 to 11 in injection slurries, in spray mortar or spray concrete according to the dry- or wet-spraying process.

## Revendications

1. Accélérateur de prise et de durcissement pour ciment, mortier et béton contenant du sulfate de calcium et un composé d'aluminium, caractérisé en ce que a) le sulfate de calcium est du sulfate de calcium dihydrate et b) le composé d'aluminium est de l'hydroxyde d'aluminium et/ou un sel d'aluminium alcalin, cristallin et/ou amorphe.

2. Accélérateur suivant la revendication 1, caractérisé en ce qu'il est exempt de métaux alcalins et de chlorure.

3. Accélérateur suivant la revendication 1 ou 2, caractérisé en ce que le sel alcalin d'aluminium est sélectionné du groupe renfermant le sulfate, le nitrate, le carbonate, le phosphate, l'acétate, le formiate ou des mélanges de ces derniers.

4. Accélérateur suivant l'une des revendications 1 à 3, caractérisé en ce qu'il contient au moins 10% en poids d'hydroxyde d'aluminium amorphe et/ou de sel d'aluminium alcalin, cristallin et/ou amorphe et jusqu'à 90% en poids du composé de sulfate de calcium.

5. Accélérateur suivant l'une des revendications 1 à 4, caractérisé en ce qu'il fait preuve d'un rapport molaire de l'aluminium par rapport au sulfate de 0,1 à 10.

6. Accélérateur suivant l'une des revendications 1 à 5, caractérisé en ce qu'il est dispersé dans l'eau.

7. Accélérateur suivant l'une des revendications 1 à 6, caractérisé en ce qu'il contient au moins un agent auxiliaire de dispersion.

8. Accélérateur suivant la revendication 7, caractérisé en ce que l'agent auxiliaire de dispersion est sélectionné du groupe renfermant des polymères ou des copolymères d'acide acrylique ou d'acide méthacrylique ou des dérivés de ces derniers, des condensates sulfonés de mélamine- ou de naphtalène-formaldéhyde ou des dérivés d'acides phosphoniques ou des mélanges de ces derniers.

9. Accélérateur suivant l'une des revendications 1 à 8, caractérisé en ce qu'il contient au moins un épaississant.

10. Accélérateur suivant la revendication 9, caractérisé en ce que l'épaississant est sélectionné du groupe renfermant de la bentonite, des bentones, des dioxydes de silicium amorphes, des biopolymères organiques fermentés, des alginates, des polyéthers glycoliques, des acrylates, des épaississants d'acrylate ou d'uréthane ou bien des mélanges de ces derniers.

11. Accélérateur suivant l'une des revendications 1 à 10, caractérisé en ce qu'il est présent en forme d'au moins deux composantes, dont l'une contient le sulfate de calcium et l'autre l'hydroxyde de calcium amorphe et/ou les sels d'aluminium alcalins, cristallins et/ou amorphes.

12. Procédé pour l'accélération de la prise et du durcissement du ciment, ainsi que du béton et du mortier fabriqués à partir du ciment, caractérisé en ce qu'au mélange contenant le ciment, un accélérateur suivant l'une des revendications 1 à 11 est rajouté en une quantité de 0,1 à 20% en poids, par rapport au poids du ciment.

13. Procédé suivant la revendication 12, caractérisé en ce que l'accélérateur de prise et de durcissement poudreux est prémélangé avec le ciment anhydre ou prémélangé avec le mortier anhydre ou avec le béton et que ce mélange est ensuite durci par l'addition d'eau.

14. Procédé suivant la revendication 12, caractérisé en ce que la composante de l'accélérateur suivant la revendication 11 contenant du sulfate de calcium est rajoutée lors de la fabrication du mortier ou du béton dans l'usine et que la composante contenant l'hydroxyde d'aluminium amorphe et/ou le sel d'aluminium cristallin et/ou amorphe est rajoutée sur le chantier.

15. Procédé suivant l'une des revendications 12 à 14, caractérisé en ce que l'accélérateur est rajouté au mortier ou au béton anhydre ou bien au liant prémélangé avec de l'eau au niveau de l'usine, sur le chantier, dans le mélangeur, dans la pompe à projection, les conduits de projection, la buse humectifiante, l'injecteur ou par un mélangeur statique avec un appareil de dosage de poudre ou un appareil de dosage pour liquide directement dans le mélange ou avec de l'air à propulsion.

16. Utilisation des accélérateurs suivant l'une des revendications 1 à 11 pour l'accélération de la prise et du durcissement du ciment.

17. Utilisation de l'accélérateur de prise et de durcissement suivant l'une des revendications 1 à 11 dans des boues d'injection, dans le mortier projeté ou le béton projeté suivant le procédé à projection humide ou anhydre.
